Europäisches Patentamt

European Patent Office

Office européen des brevets

(11) Veröffentlichungsnummer: **0 308 617 B1**

(12) **EUROPÄISCHE PATENTSCHRIFT**

(45) Veröffentlichungstag der Patentschrift: **02.12.92**

(21) Anmeldenummer: **88111992.9**

(22) Anmeldetag: **26.07.88**

(51) Int. Cl.⁵: **H04N 5/63**

(54) **Fernsehempfänger mit Bereitschaftsbetriebssteuerschaltung.**

(30) Priorität: **19.09.87 DE 3731568**

(43) Veröffentlichungstag der Anmeldung:
**29.03.89 Patentblatt 89/13**

(45) Bekanntmachung des Hinweises auf die
Patenterteilung:
**02.12.92 Patentblatt 92/49**

(84) Benannte Vertragsstaaten:
**AT BE CH DE ES FR GB GR IT LI LU NL SE**

(56) Entgegenhaltungen:
**WO-A-87/04885**
**US-A- 3 381 165**
**US-A- 4 651 214**

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Hartmann, Uwe**
**Tallardstrasse 15**
**W-7730 Villingen-Schwenningen(DE)**
Erfinder: **Mai, Udo**
**Mühleschweg 2**
**W-7730 VS-Villingen 23(DE)**

**Beschreibung**

Die Erfindung betrifft einen Fernsehempfänger mit einer Bereitschaftsbetriebssteuerschaltung mit einer Fernbedienung und einem Empfänger und mit einer Auswerteschaltung für Fernsteuersignale und einer eine Zeilenablenkschaltung ein- und ausschaltbaren Ansteuerschaltung, die im Bereitschaftsbetrieb die Zeilenablenkschaltung außer Betrieb schaltet sowie mit einem synchronisierten Schaltnetzteil, das im Bereitschaftsbetrieb die Betriebsspannung für die Auswerteschaltung und den Empfänger für die Fernsteuersignale sowie für die Horizontaltreiber- und Endstufe liefert.

Fernsehempfänger nach dem neuesten Stand der Technik sind mit Schaltnetzteilen ausgerüstet, weil diese einen sehr guten Wirkungsgrad besitzen und im Aufbau sehr kompakt sind. Derartige Schaltnetzteile werden auch im Bereitschaftsbetrieb in Funktion gehalten. Dabei sollen zwecks Energieeinsparung nur die für den Bereitschaftsbetrieb notuendigen Stufen arbeiten und mit Betriebsspannung versorgt werden, wie z.B. die Empfängerschaltung für die Fernsteuersignale und die Schaltung für deren Auswertung. Der Fernsehempfänger wird dadurch ein- und ausgeschaltet, daß die Ansteuerung für die Zeilenablenkschaltung aktiviert oder unterdrückt wird.

Es ist ein fernsteuerbares Fernsehempfängernetzteil bekannt (US-A-4,651,214), das die Betriebsspannung aus der Zeilenablenkschaltung erzeugt, die auf der Sekundärseite des Zeilentransformators abnehmbar sind. Die Zeilenablenkschaltung wird aus einem Primärnetzteil versorgt, das eine geregelte Betriebsspannung erzeugt. Dazu ist ein Längsregler vorgesehen, der aus einem Transistor besteht, dessen Basis eine der erzeugten Ausgangsspannungen proportionale Referenzspannung zugeführt wird.

Damit ein Transistor geringerer Leistung verwendet werden kann, der nur einen Teil des Regelstromes übernimmt, ist diesem ein Shunt-Widerstand parallel geschaltet, der die Hauptlast trägt. Diesem Shunt-Widerstandist ein Schalter in Form eines Thyristors in Serie geschaltet, der im Normalbetrieb durch Ansteuerung seiner Gateelektrode mit zeilenfrequenten Impulsen aus dem Zeilentransformator durchgeschaltet wird. Im Bereitschaftsbetrieb ist der Thyristor jedoch gesperrt. Die Zeilenendstufe ist aber nur begrenzt belastbar, so daß nicht sehr viele Stufen mit hohem Leistungsverbrauch angeschlossen werden können. Deshalb ist es vorteilhaft für die Erzeugung der Betriebsspannungen in einem Fernsehempfänger ein Schaltnetzteil zu verwenden.

Der Erfindung liegt die Aufgabe zugrunde, bei Einsatz eines solchen Schaltnetzteils die Kosten für einen energiesparenden Bereitschaftsbetrieb weiter zu senken, indem durch einfache Mittel Leistung verbrauchende Stufen abgeschaltet werden. Diese Aufgabe wird durch die im Patentanspruch angegebenen Maßnahmen gelöst.

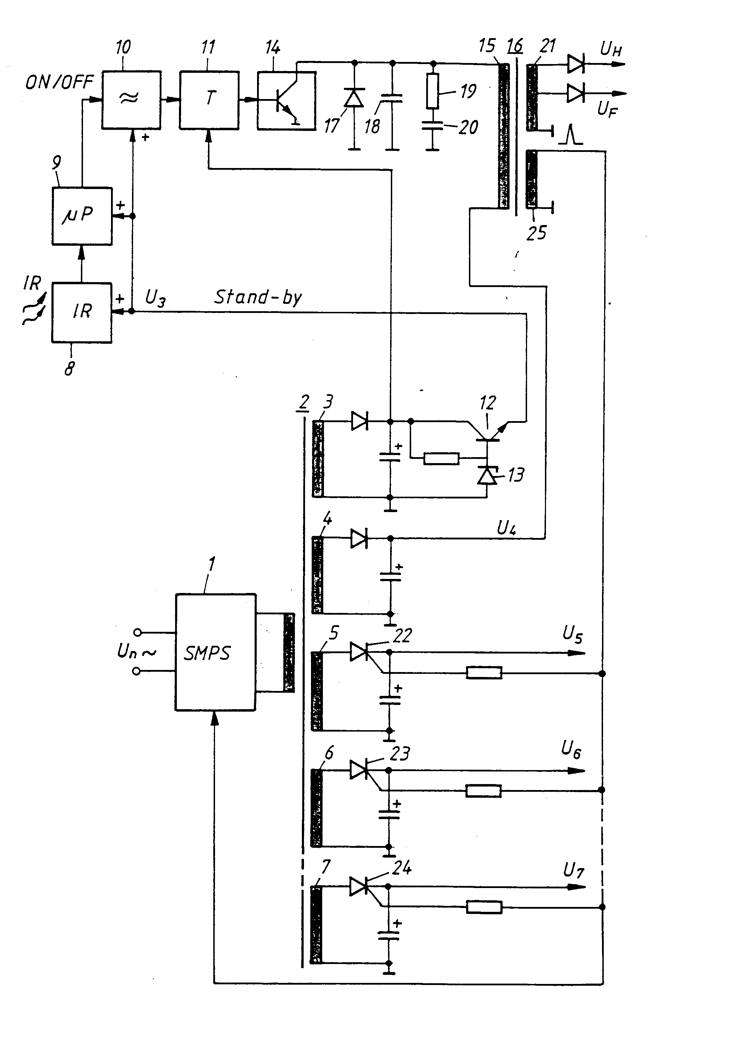

Nachstehend wird die Erfindung mit Hilfe der Zeichnung an einem Ausführungsbeispiel erläutert.

In der Figur sind nur die für die Erfindung wesentlichen Teile eines Fernsehempfängers dargestellt. Es handelt sich in dem gezeigten Beispiel um ein zeilensynchrones Schaltnetzteil (SMPS) 1, das über einen Schaltnetzteiltransformator 2 an Sekundärwicklungen 3, 4, 5, 6 und 7 Betriebsspannungen (U3 bis U7) für die verschiedenen Stufen des Fernsehempfängers erzeugt. Zur Aufrechterhaltung einer ständigen Betriebsbereitschaft (Stand-by) des Fernsehempfängers wird über die Wicklung 3 des Schaltnetzteiltransformators 2 eines zunächst mit der Frequenz der Netzwechselspannung UN synchronisierten Schaltnetzteils 1 die Betriebsspannung U3 für den Fernsteuerempfänger 8 und den Mikroprozessor 9 sowie für den Horizontaloszillator 10 und die Horizontaltreiberschaltung 11 bereitgestellt. Diese Spannung ist in üblicher Weise über einen Längsregler 12 und eine Z-Diode 13 stabilisiert. Wenn durch den Fernsteuerempfänger 8 der Mikroprozessor 9 einen Einschaltbefehl erzeugt, wird der Zeilenoszillator 10 in Betrieb gesetzt. Die an diesen angeschaltete Horizontaltreiberschaltung 11 steuert die Horizontalendstufe 14 an. Diese wird von einer Sekundärspannung (U4) aus der Sekundärwicklung 4 des Schaltnetzteiltransformators 2 versorgt, die über die Primärwicklung 15 des Zeilentransformators 16 an die Zeilenendstufe 14 gelangt. Mit 17, 18, 19 und 20 sind Rücklaufdiode, Rücklaufkondensator, Ablenkspule und Tangenskondensator der Zeilenablenkschaltung bezeichnet. Die Sekundärwicklung 21 des Zeilentransformators 16 dient zur Erzeugung von Hochspannung UH und Fokussierspannung UF. Sämtliche übrigen Leistungsverbraucher des Gerätes werden über Sekundärwicklungen 5 und 6 und gegebenenfalls weitere Wicklungen 7 versorgt. Statt eines Gleichrichters ist an die Sekundärwicklungen 5,6 bis 7 des Schaltnetzteiltransformators 2 je ein Thyristor 22,23 bzw. 24 gelegt, der von zeilenfrequenten Impulsen aus einer Sekundärwicklung 25 des Zeilentransformators 16 angesteuert wird. Die Erfindung nutzt die Tatsache aus, daß im Stand-by-Betrieb keine Ansteuerimpulse für die Treiberstufe 11 entstehen. Dadurch werden an der Wicklung 25 auch keine Ansteuerimpulse für die Thyristoren 22, 23 und 24 erzeugt, so daß keine Betriebsspannungen U1 bis U3 entstehen können. Erst, wenn die Zeilenendstufe 14 bei Einschalten des Empfängers zu arbeiten beginnt, werden auch die Thyristoren 22, 23 und 24 in Betrieb genommen.

Statt der gezeigten Thyristoren 22,23,24 sind auch andere elektronische Schalter mit gleicher Wirkung denkbar, welche die gleichgerichteten Betriebsspannungen im Normalbetrieb durchschalten.

**Patentansprüche**

1. Fernsehempfänger mit einer Bereitschaftsbetriebssteuerschaltung mit einer Fernbedienung und einem Fernsteuerempfänger und mit einer Auswerteschaltung für Fernsteuersignale und einer eine Zeilenablenkschaltung ein- und ausschaltbaren Ansteuerschaltung, die im Bereitschaftsbetrieb die Zeilenablenkschaltung außer Betrieb schaltet sowie mit einem synchronisierten Schaltnetzteil, das im Bereitschaftsbetrieb die Betriebsspannung für die Auswerteschaltung und den Empfänger für die Fernsteuersignale sowie für die Horizontaltreiber- und Endstufe liefert, **dadurch gekennzeichnet,** daß für die vom Schaltnetzteil (1, 2) erzeugten Betriebsspannungen ($U_5$ - $U_7$) für die übrigen Stufen des Fernsehempfängers je ein Thyristor (22 - 24) vorgesehen ist, der mit je einer Sekundärwicklung (5, 6, 7) des Schaltnetztransformators (2) verbunden ist, wobei die Thyristoren (22, 23, 24) im Normalbetrieb des Fernsehempfängers durch zeilenfrequente Impulse aus dem Zeilentransformator (16) durchgeschaltet werden und im Stand-by-Betrieb gesperrt sind.

**Claims**

1. Television receiver with a stand-by mode control circuit with a remote control and a remote-control receiver and with an evaluation circuit for remote control signals and a drive circuit switching on and off a line sweep circuit which in stand-by mode switches the line sweep circuit out of operation, and also with a synchronized switched-mode power supply which in stand-by mode supplies the operating voltage for the evaluation circuit and the receiver for the remote control signals and also for the horizontal driver and output stages, characterised in that for the operating voltages ($U_5$ - $U_7$) generated by the switched-mode power supply (1,2) for the remaining stages of the television receiver there is provided in each case a thyristor (22-24) which is connected respectively to a secondary winding (5, 6, 7) of the switched-mode transformer (2), the thyristors (22, 23, 24) being rendered conductive in normal mode of the television receiver by line-frequency pulses from the line transformer (16) and being non-conductive in stand-by mode.

**Revendications**

1. Récepteur de télévision avec un circuit de commande de mode d'attente avec une télécommande et un récepteur de télécommande et un circuit d'exploitation pour les signaux de télécommande et un circuit d'excitation qui met en et hors circuit un circuit de balayage des lignes qui, en mode d'attente, met hors circuit le circuit de balayage des lignes ainsi qu'avec un bloc d'alimentation et de commutation synchronisé qui, en mode d'attente, donne la tension de fonctionnement pour le circuit d'exploitation et le récepteur pour les signaux de télécommande ainsi que pour l'étage d'attaque horizontale et l'étage de sortie, caractérisé en ce qu'il est prévu un thyristor (22 - 24) pour chacune des tensions de fonctionnement ($U_5$ - $U_7$) produites par le bloc d'alimentation et de commutation (1, 2) pour les autres étages du récepteur de télévision, thyristor qui est relié respectivement à un enroulement secondaire (5, 6, 7) du transformateur du bloc d'alimentation et de commutation (2), les thyristors (22, 23, 24) étant ouverts, en mode normal du récepteur de télévision, par des impulsions à fréquence ligne provenant du transformateur ligne (16) et étant bloqués en mode d'attente.

EP 0 308 617 B1